# EUROPÄISCHE PATENTSCHRIFT

(11) **EP 3 938 804 B1**
(45) Veröffentlichungstag und Bekanntmachung des Hinweises auf die Patenterteilung: **30.04.2025**
(21) Anmeldenummer: 20714471.8
(22) Anmeldetag: 10.03.2020
(51) Int. Cl.: G01S 7/4861, G01S 7/4863, G01S 7/4865, G01S 7/487, G01S 17/42, G01S 17/89, G01S 17/931, G01S 7/481

(54) **LASERSCANEINRICHTUNG UND VERFAHREN ZUR DREIDIMENSIONALEN VERMESSUNG EINER SZENERIE IN GROSSER ENTFERNUNG**
LASER SCANNING DEVICE AND METHOD FOR THE THREE-DIMENSIONAL MEASUREMENT OF A SETTING FROM A GREAT DISTANCE
DISPOSITIF DE BALAYAGE LASER ET PROCÉDÉ DE MESURE TRIDIMENSIONNELLE D'UNE SCÈNE À UNE DISTANCE ÉLEVÉE

(30) Priorität: 13.03.2019 DE 102019106411
(43) Veröffentlichungstag der Anmeldung: 19.01.2022
(73) Patentinhaber: JENOPTIK Optical Systems GmbH, 07745 Jena (DE)
(72) Erfinder: SCHNEIDER, Frank, 07987 Mohlsdorf-Teichwolframsdorf (DE)
(74) Vertreter: Gleim Petri Patent- und Rechtsanwaltspartnerschaft mbB
(86) Internationale Anmeldenummer: PCT/DE2020/100164
(87) Internationale Veröffentlichungsnummer: WO 2020/182255

(56) Entgegenhaltungen:
- EP-A1- 2 469 296
- DE-A1- 102007 030 823
- US-A1- 2017 350 967
- US-A1- 2018 284 268

## Beschreibung

Die Erfindung betrifft eine Laserscaneinrichtung und ein Verfahren, wie sie gattungsgemäß aus der EP 2 182 377 B1 bekannt sind.

Die dreidimensionale Vermessung der Umgebung erlangt im industriellen und automobilen Umfeld eine immer größer werdende Bedeutung. Dabei werden 3D-Kameras zunehmend von Laserscaneinrichtungen abgelöst, von denen mehr oder weniger, je nach dem vorgesehenen Einsatz, ein großes Sichtfeld, eine hohe Ortsauflösung, eine hohe Reichweite und/oder ein großer Dynamikbereich abverlangt werden. Diese Forderungen stehen sich grundsätzlich einander widersprechend gegenüber. Zwingend müssen auch die Parameter der von der Laserscaneinrichtung ausgesendeten Laserpulse so gewählt werden, dass deren Energie im Bereich der Augensicherheit liegt.

Bekannte Laserscaneinrichtungen, wie z. B. in der vorgenannten EP 2 182 377 B1 offenbart, und so auch eine erfindungsgemäße Laserscaneinrichtung umfassen eine Sendeeinheit zum Aussenden von Laserpulsen, eine Empfängereinheit zum Empfang jeweils eines an einem Zielobjekt reflektierten Anteils eines Laserpulses, eine Speicher- und Auswerteeinheit zur Ermittlung von Entfernungen aus von der Empfängereinheit gebildeten Empfängersignalen sowie eine bewegliche Ablenkeinheit zur ein- oder zweidimensionalen Auslenkung der Abstrahlrichtung der Laserpulse im Überwachungsbereich.

Zur Ermittlung einer Entfernung eines Zielobjektes basierend auf dem Prinzip des Impulslaufzeitverfahrens werden nacheinander mit einer Frequenz, die nach oben durch die maximal zu erwartende Laufdauer eines Laserpulses begrenzt ist, einzelne Laserpulse ausgesandt. Die Laufzeit jeweils eines Laserpulses entspricht der Zeitdauer zwischen dem Aussenden des Laserpulses und dem Empfangszeitpunkt. Der Empfangszeitpunkt wird durch das Eintreten eines bestimmten Charakteristikums eines durch den empfangenen reflektierten Anteil des Laserpulses verursachten Nutzsignalanteils im Empfängersignal, beispielsweise eines Maximums, bestimmt. Aus der Kenntnis der jeweiligen Stellung der Ablenkeinheit und der räumlichen Ausrichtung der Sende- und der Empfängereinheit zu einem Zeitpunkt des Aussendens eines Laserpulses und der zugehörig ermittelten Entfernung kann über den Überwachungsbereich ein dreidimensionales Tiefenprofil erstellt werden. Die Stellung der Ablenkeinheit wird dabei in der Regel für einen Linienscanner durch einen horizontalen Winkel in einer Scanebene um eine Drehachse oder für einen Matrixscanner durch einen horizontalen Winkel in einer Scanebene um eine Drehachse und einen vertikalen Winkel in einer Crossscanebene um eine zweite Drehachse in einem Koordinatensystem bestimmt. Bei gewählter Laserpulsfrequenz wird die Ortsauflösung mit zunehmender Scangeschwindigkeit und zunehmender Entfernung der zu erwartenden Zielobjekte in der Szenerie geringer. Gleichzeitig muss in Abhängigkeit von der Scangeschwindigkeit die Empfangsdivergenz bzw. die Größe der Empfängerfläche der Empfängereinheit in der Scanrichtung so gewählt werden, dass ein am Zielobjekt reflektierter Anteil des Laserpulses von der Empfängereinheit detektiert wird, obwohl die Empfängereinheit mit der Scangeschwindigkeit gegenüber dem Zielobjekt bewegt wird. Dieses Problem wird auch in der weiter unten noch genauer besprochenen Patentschrift EP 2 998 700 B1 aufgeführt. Eine größere Empfängerfläche und eine größere Empfangsdivergenz haben jedoch zur Folge, dass mehr Gleichlicht (Umgebungslicht, Fremdlicht) auf die Empfängerfläche auftrifft und zunehmend das von der Empfängereinheit gebildete Empfängersignal beeinflusst. Unter einem Empfängersignal im Sinne dieser Beschreibung wird ein Amplitudensignal verstanden, das über die Empfangsdauer der Empfängereinheit durch den Nutzsignalanteil und einen (unter anderem) durch das Gleichlicht verursachten Rauschsignalanteil gebildet wird. In einem einzelnen Empfängersignal den Nutzsignalanteil bzw. ein Charakteristikum des Nutzsignalanteils zu erkennen, setzt zumindest voraus, dass in dem Empfängersignal die durch den Nutzsignalanteil verursachte Amplitude höher ist als die höchste Amplitude, die durch den Rauschsignalanteil verursacht wird, was für sehr große Entfernungen nicht gegeben ist.

Typische Maßnahmen, um den Gleichlichteinfluss zu verringern, sind das Vorordnen eines schmalbandigen optischen Filters vor die Empfängerfläche der Empfängereinheit, der eine maximale Transmission im Spektralbereich des ausgesendeten Laserpulses aufweist, und die Auswahl der Empfängereinheit mit einer angepassten spektralen Empfindlichkeit sowie die Anpassung der spektralen Bandbreite des Verstärkers an das Spektrum des Laserpulses. Für größere Entfernungen, aus denen ein reflektierter Nutzsignalanteil eine vergleichsweise nur kleine Amplitude aufweist, was schon bei einer Entfernung von ca. 50 m der Fall sein kann, sind diese Maßnahmen oft nicht ausreichend.

Zur Verbesserung der Auswertbarkeit eines Empfängersignals ist es für eindimensional messende, zumindest während der Messung stationäre Laserentfernungsmessgeräte bekannt, mehrere Laserpulse nacheinander auf dasselbe Zielobjekt zu richten und anschließend die einzelnen Empfängersignale zu akkumulieren. Durch die Addition der Empfängersignale bei in diesem Fall praktisch gleichen Amplituden des Nutzsignalanteils (Signal) und zufälligen Amplituden des Rauschsignalanteils, die unterschiedliche Vorzeichen bezogen auf einen Mittelwert aufweisen, weist das akkumulierte Empfängersignal ein eindeutig besseres Signal-Rausch-Verhältnis auf als ein einzelnes Empfängersignal.

Aus der DE 10 2011 054 451 A1 sind ein Verfahren und eine Vorrichtung zur optischen Distanzmessung über große Distanzbereiche offenbart, bei denen für eine Auswertung nach der Abtastmethode geeignete zweite Laserpulse ausgesendet werden, wenn sich bei der Auswertung der Empfängersignale nach der Schwellwertmethode, verursacht durch einen ersten Laserpuls, keine Empfangszeitpunkte ableiten lassen. Damit kann für Entfernungsmessungen im Nahbereich, aus hohen Amplituden der Nutzsignalanteile, der Empfangszeitpunkt über die genauere Ergebnisse liefernde Schwellwertmethode aus den Empfängersignalen ermittelt werden. Für Messungen im Fernbereich kann aus kleinen Amplituden der Nutzsignalanteile, für die eine Auswertung über die Schwellwertmethode nicht funktioniert, der Empfangszeitpunkt über die Abtastmethode aus den Empfängersignalen mittels einer Akkumulation von abgetasteten Empfängersignalen ermittelt werden.

Die Anforderung an eine hohe Reichweite (große Entfernung der Zielobjekte) ist nicht gleichzusetzen mit der Anforderung an einen großen Entfernungsbereich (Zielobjekte in sehr unterschiedlichen Entfernungen). Ein großer Entfernungsbereich verlangt einen großen Dynamikbereich und man muss nicht auch zwingend Maßnahmen zur Unterdrückung von Gleichlicht treffen, wenn die Amplitude des Nutzsignalanteils ausreichend hoch ist. Hingegen kann für einen Entfernungsmesser mit einer hohen Reichweite, wenn sich die zu erwartenden Zielobjekte alle in einer großen Messentfernung befinden, ein nur kleiner Dynamikbereich ausreichend sein, wohl aber kann es dann nötig sein Maßnahmen zu treffen, um den Einfluss von Gleichlicht auf das Empfängersignal zu minimieren bzw. um die Auswertbarkeit des Empfängersignals zu verbessern.

Die Auswertung von Empfängersignalen über die Abtastmethode und die Verbesserung von deren Auswertbarkeit durch Akkumulation von Empfängersignalen wird in der vorgenannten DE 10 2011 054 451 A1 beschrieben. Zur Auswertung wird das analoge Empfängersignal abgetastet und es werden digitalisierte Abtastwerte gebildet, die jeweils einem der Abtastzeitpunkte zugeordnet sind und in ihrer Gesamtheit ein digitalisiertes Abtastsignal bilden. Durch Akkumulation, das heißt wiederholtes zeitsynchrones Abtasten und Aufaddieren zugehöriger digitalisierter Abtastwerte von aufeinanderfolgenden Empfängersignalen, wird ein akkumuliertes Empfängersignal gebildet. Das akkumulierte Empfängersignal weist ein besseres Signal-Rausch-Verhältnis SNR auf als die einzelnen Empfängersignale und ermöglicht so die Erhöhung der Reichweite. Die Verbesserung des SNR ist dabei proportional zur Wurzel aus der Anzahl der das akkumulierte Empfängersignal bildenden einzelnen Empfängersignale.

Die Möglichkeit der Akkumulation von Empfängersignalen, die zeitlich nacheinander gebildet werden, ist aus dem Stand der Technik auf stationäre Sende- und Empfangssysteme beschränkt bekannt, da bei Systemen mit Strahlablenkung und einem Empfänger mit einer wegen einer angestrebten hohen Ortsauflösung üblicherweise kleinen Empfangsdivergenz ein gleiches Zielobjekt nicht mehrfach hintereinander angemessen wird.

Es konnte im Stand der Technik keine Laserscaneinrichtung und kein Verfahren unter Nutzung einer Laserscaneinrichtung festgestellt werden, bei denen eine verbesserte Auswertbarkeit von Empfängersignalen über eine Akkumulation von Empfängersignalen geschaffen wird.

Eine Vielzahl von aus dem Stand der Technik bekannten Laserscaneinrichtungen sollen einen großen Dynamikbereich abdecken.

Typische Einsatzbereiche für solche Laserscaneinrichtungen sind die Überwachungstechnik in der Industrie und in Fahrzeugen, wo sich innerhalb des Überwachungsbereiches Objekte in Entfernungen von wenigen Zentimetern bis hin zu einigen zehn Metern befinden können. Entsprechend muss der Dynamikbereich, innerhalb dessen ein Empfängersignal einerseits nicht zur Übersteuerung führt, aber andererseits auch noch gebildet werden kann, sehr groß sein. Die Forderung nach einem großen Dynamikbereich steht auch, wenn die Zielobjekte unterschiedliche Oberflächen und damit ein sehr unterschiedliches Remissionsverhalten aufweisen. Vereinzelte im Stand der Technik angegebene Lösungen, die einen großen Dynamikbereich aufweisen, führen auch zu einer Verbesserung des Signal-Rausch-Verhältnisses zwischen dem eigentlichen Nutzsignalanteil, verursacht durch den am Zielobjekt reflektierten Anteil eines Laserpulses, und einem diesen Nutzsignalanteil überlagernden Rauschsignalanteil.

In der US 5 311 353 A ist ein optischer Empfänger mit einem hohen Dynamikbereich offenbart, in dem ein erster linearer Verstärker und ein zweiter logarithmischer Verstärker vorgesehen sind. Die beiden gebildeten Verstärkersignale werden entweder aufaddiert oder eines der beiden Verstärkersignale wird für die Auswertung selektiert. So liegen schwache Empfängersignale innerhalb des Dynamikbereiches des ersten Verstärkers und werden linear verstärkt, während starke Empfängersignale innerhalb des Dynamikbereiches des zweiten Verstärkers liegen und logarithmisch verstärkt werden. Beide einzelnen Dynamikbereiche der Verstärker zusammen stellen den effektiven Dynamikbereich des Empfängers dar. Gleichlicht wird hier nicht als Problem erwähnt, was darin begründet sein kann, dass auch bei den größten zu erwartenden Zielentfernungen in dem Empfängersignal noch ein deutlich höherer Nutzsignalanteil als die Rauschsignalanteile erwartet wird.

Auch die vorgenannte EP 2 182 377 B1 schlägt einen Entfernungsmesser vor, hier einen entfernungsmessenden Laserscanner, mit den eingangs genannten Merkmalen bekannter Laserscaneinrichtungen, wobei der für ein einzelnes Verstärkerelement zu große effektive Dynamikbereich durch die Verwendung von zwei Verstärkern aufgeteilt wird. Das Empfängersignal wird parallel einem empfindlicheren und einem weniger empfindlichen Verstärkungspfad zugeführt, die mit einem ersten bzw. einem zweiten Verstärker verbunden sind. Für eine digitale Signalauswertung und damit Entfernungsbestimmung sind die beiden Verstärkungspfade aus Kostengründen auf einen gemeinsamen Analog-Digital-Wandler geführt, wobei die beiden Empfängersignale der Verstärkungspfade zuvor reversibel kombiniert werden. Neben dem Hauptanliegen eines großen effektiven Dynamikbereiches soll diese Lösung den Vorteil aufweisen, dass aufgrund der getrennten Auswertung von schwachen und starken Empfängersignalen schwache Störsignale, etwa von einer Frontscheibe oder Nebeltröpfchen, die durch eine Überlappung mit dem eigentlichen Nutzsignal das Messergebnis verfälschen, unterdrückt werden können.

In der vorgenannten EP 2 998 700 B1 wird das eigentliche Problem, das sich bezüglich der Qualität der Empfängersignale und deren Auswertung für scannende Laserentfernungsmesser im Unterschied zu Laserentfernungsmessern mit einem stationären Sender ergibt, angesprochen. Es ergibt sich aus einer hohen Scangeschwindigkeit, die dazu führt, dass der Empfänger mit einem großen Sichtfeld (FOV) ausgelegt sein muss, damit der vom Zielobjekt zurückreflektierte Empfangsstrahl auf den Empfänger bzw. dessen Empfängerfläche auftrifft. Empfänger mit einem großen Sichtfeld haben jedoch den Nachteil, dass entsprechend auch viel Tages- oder Umgebungslicht (Gleichlicht) auf den Empfänger auftrifft. Gleichzeitig führt ein zunehmend größeres Sichtfeld zu einer zunehmend geringeren Ortsauflösung des von der Szenerie im Sichtfeld der Laserscaneinrichtung gebildeten Tiefenprofils.

Es werden in der vorgenannten EP 2 998 700 B1 ein Distanzmessverfahren und ein für scannende Systeme geeigneter optoelektronischer Distanzmesser mit einem Detektor vorgeschlagen, der nicht nur bezüglich des Dynamikbereiches, sondern auch bezüglich des Signal-Rausch-Verhältnisses verbessert sein soll. Der Detektor weist zwei voneinander unabhängige Empfangssegmente auf, die zum voneinander unabhängigen Erzeugen je eines resultierenden elektrischen Empfängersignals vorgesehen und so ausgebildet sind, dass diese vordefinierten unterschiedlichen Entfernungsbereichen zugeordnet sind. Im Unterschied zu gemäß dem Stand der Technik unsegmentierten Detektoren wird der erforderliche effektive Dynamikbereich des Distanzmessers auf kleinere Dynamikbereiche aufgeteilt. Durch die Unterteilung des Detektors in voneinander unabhängige Empfangssegmente soll auch der Betrag des Hintergrundlichtes aufgeteilt werden, womit sich sein Einfluss auf ein gebildetes Empfängersignal reduzieren müsste.

Die DE 10 2007 030 823 A1 offenbart ein Radargerät, das durch die Integration von Empfangssignalen ein verbessertes Signal-Rausch-Verhältnis aufweist. Die Vorrichtung dient dazu, eine Spitzenwertwellenform eines Reflexionsobjektes aufzunehmen. Dafür werden eine Mehrzahl von Laserpulsen innerhalb eines Winkelbereichs abgestrahlt und reflektierte Signale empfangen. Das gescannte Field of View wird anschließend in mehrere, sich überlappende Bereiche unterteilt, für die jeweils Empfangssignale parallel gespeichert und integriert werden. Im Anschluss findet ein komplexes Auswerteverfahren statt, bei dem über eine Spitzenwertsuche eine Spitzenwertgruppe bestimmt wird und im Anschluss Rauschkomponenten entfernt werden, um ein besseres Signal-Rausch-Verhältnis zu erzielen und so die Genauigkeit der Abstandsberechnung zum Reflexionsobjekt zu erhöhen.

Bei einer in der US 2017/0350967 A1 offenbarten LIDAR-Vorrichtung und einem entsprechenden Verfahren wird eine zu erfassende Szene in Teilbereichen erfasst, indem die Szene horizontal abscannt wird. Zum Erfassen der Teilbereiche wird eine Empfängermatrix verwendet, deren Pixel zumindest in Scanrichtung eine reduzierte Empfangsdivergenz aufweisen. Durch die reduzierte Divergenz soll sich der Signal-Rausch-Abstand zwischen dem zu erfassenden Nutzsignal und dem Hintergrundlicht vergrößern. Die geringere Divergenz führt weiterhin zu einer besseren räumlichen Auflösung, wodurch sich auch der Einfluss von Artefakten durch Blendungswirkung sehr heller Lichtquellen reduzieren lässt. Wie sich die geringe Divergenz auf den Dynamikbereich der Entfernungsmessung auswirkt, ist hier nicht offenbart, zumal keine Maßnahmen vorgesehen sind, mit denen sich die Signalqualität von schwachen Nutzsignalen aus großen Entfernungen verbessern lässt.

Aus der US 2018/284268 ist eine LIDAR-Vorrichtung bekannt, die über eine Sendeeinheit, die eine Folge von Laserpulsen emittiert, eine Empfängereinheit, einen A/D-Wandler sowie eine Scaneinrichtung mit einer Steuereinheit und einer einfachen Speicher- und Auswerteeinheit verfügt. Der Strahlquerschnitt der emittierten Laserpulse ist elliptisch, wodurch das Field of View nicht in mehrere gleich große Empfängerzellen unterteilt werden kann, ohne dass sich diese überlappen oder Information verloren geht. Dadurch ist eine komplexe Auswertung der Empfängersignale notwendig, wenn mehrere Empfängerzellen parallel gescannt werden. Die Ausrichtung von Empfängerfläche der Empfängereinheit und Laserstrahl entspricht der anderer aus dem Stand der Technik bekannten Einrichtungen, bei denen die Abstrahl- und Empfangsdivergenz in Scanrichtung kleiner ist als in Crossscanrichtung.

Es ist die Aufgabe der Erfindung, ein Verfahren zur dreidimensionalen Vermessung einer Szenerie in einem großen Sichtfeld und in großer Entfernung zu finden, mit dem die Auswertbarkeit eines Empfängersignals verbessert wird. Gleichzeitig soll mit dem Verfahren die Ortauflösung eines aus den Empfängersignalen generierten Tiefenprofils (Entfernungsbild) der Szenerie verbessert werden.

Es ist auch die Aufgabe der Erfindung, eine zur Durchführung des Verfahrens geeignete Laserscaneinrichtung zu finden.

Diese Aufgabe wird für eine Laserscaneinrichtung mit den Merkmalen des Anspruches 1 erfüllt.

Vorteilhafte Ausführungen der Laserscaneinrichtung sind in den rückbezogenen Ansprüchen 2 bis 5 angegeben.

Die Aufgabe wird ferner für ein Verfahren mit den Merkmalen des Anspruches 6 erfüllt.

Die Erfindung soll nachfolgend anhand von Ausführungsbeispielen mit Hilfe von Zeichnungen näher erläutert werden. Hierzu zeigen:
- Fig. 1: eine Prinzipskizze eines Ausführungsbeispiels einer erfindungsgemäßen Laserscaneinrichtung,
- Fig. 2: eine Darstellung einer beispielhaften Anordnung von zwei Empfängereinheiten und vier Sendeeinheiten mit je zwei Sendekanälen und
- Fig. 3: eine vereinfachte schematische Darstellung zum Verfahrensablauf.

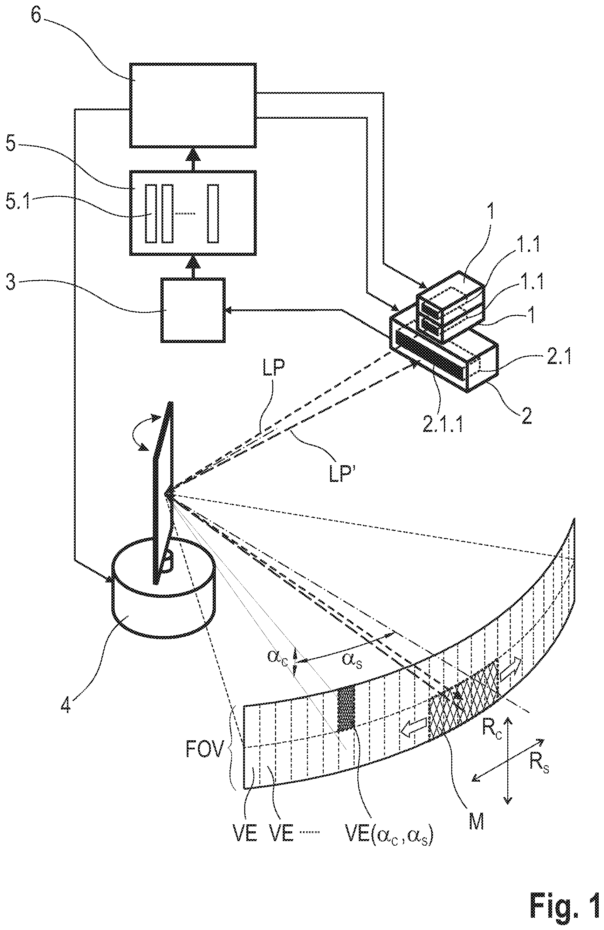

Fig. 1 zeigt ein Ausführungsbeispiel einer erfindungsgemäßen Laserscaneinrichtung zur dreidimensionalen Vermessung einer Szenerie in einem Sichtfeld FOV in großer Entfernung. Unter einer großen Entfernung wird eine Entfernung verstanden, aus der ein reflektierter und detektierter Anteil LP' eines Laserpulses LP in einem Empfängersignal S einen Nutzsignalanteil S_{N} bewirkt, der sich nicht aus einem durch Gleichlicht verursachten Rauschsignalanteil S_{R} hervorhebt. In Abhängigkeit vom Reflexionsvermögen der Szenerie kann das bereits in ca. 50 m Entfernung gegeben sein.

Die Laserscaneinrichtung weist mindestens eine Sendeeinheit 1, mit mindestens einem Sendekanal 1.1, zum Aussenden von Laserpulsen LP in einer Folge und mindestens eine Empfängereinheit 2, mit einem Empfängerkanal 2.1, eine Empfängerfläche 2.1.1 aufweisend, zum Empfang von aus Messfeldern M der Szenerie zurückreflektierten Anteilen LP' der Laserpulse LP in einer Folge und zur Bildung von Empfängersignalen S auf. Die gegebenenfalls mehreren Sendekanäle 1.1 sind in einer Crossscanrichtung Rc nebeneinander angeordnet.

Die in Fig. 1 als Prinzipskizze dargestellte Laserscaneinrichtung weist, für eine einfache Beschreibung der Funktionsweise und übersichtliche Darstellung, beispielhaft zwei Sendeeinheiten 1 mit jeweils einem Sendekanal 1.1 und eine Empfängereinheit 2 auf.

Eine erfindungsgemäße Laserscaneinrichtung weist des Weiteren, wie die gattungsgleichen Laserscaneinrichtungen des Standes der Technik, grundsätzlich einen Analog-Digital-Wandler 3 zur Digitalisierung der Empfängersignale S, eine Ablenkeinheit 4 zum Scannen der Laserpulse LP in einer Scanrichtung Rs, eine Speicher- und Auswerteeinheit 5 sowie eine Steuereinheit 6 auf.

Es ist erfindungswesentlich, dass die Sendekanäle 1.1 so ausgelegt sind, dass die ausgesendeten Laserpulse LP einen rechteckigen Strahlquerschnitt aufweisen, und dass die Empfängerfläche 2.1.1 rechteckig ist. Weiterhin ist es erfindungswesentlich, dass eine Abstrahldivergenz der Sendekanäle 1.1 sowie eine Empfangsdivergenz der Empfängerkanäle 2.1 in der Scanrichtung Rs jeweils um ein Vielfaches größer sind als eine Abstrahldivergenz der Sendekanäle 1.1 und eine Empfangsdivergenz der Empfängerkanäle 2.1 in der Crossscanrichtung Rc senkrecht zur Scanrichtung Rs. Dadurch erhält ein durch jeweils einen der Laserpulse LP beaufschlagtes Messfeld M im Sichtfeld FOV eine rechteckige Form mit einer größeren Ausdehnung in Scanrichtung Rs.

Es ist auch erfindungswesentlich, dass die Speicher- und Auswerteeinheit 5 mehrere Speicher- und Auswertebereiche 5.1 enthält, zur parallelen Speicherung digitalisierter Empfängersignale SD und Bildung mehrerer akkumulierter Empfängersignale SA, aus denen jeweils über dem Fachmann bekannte Algorithmen eine Entfernung ableitbar ist. Vorteilhaft betragen die Abstrahl- und Empfangsdivergenzen in der Scanrichtung R_{S} wenigstens das Dreifache der Abstrahl- und Empfangsdivergenzen in Crossscanrichtung Rc, um auch bei einer hohen Scangeschwindigkeit eine hohe Überlappung der Messfelder M zu erreichen.

Indem in der Scanrichtung Rs und der Crossscanrichtung Rc die Abstrahldivergenz und die Empfangsdivergenz jeweils gleich sind, erfährt das Messfeld M vorteilhaft keine Einschränkung durch die jeweils kleinere Divergenz in einer der beiden Richtungen.

Die addierte Abstrahldivergenz aller Sendekanäle 1.1 in der Crossscanrichtung Rc ist bestimmend für die Größe des Sichtwinkels des Sichtfeldes FOV in Crossscanrichtung Rc, während die Abstrahldivergenz in der Scanrichtung R_{S} und der Scanwinkel, um den die Ablenkeinheit 4 um eine Drehachse auslenkbar ist, für die Größe des Sichtwinkels des Sichtfeldes FOV in Scanrichtung R_{S} bestimmend sind.

Die Größe der jeweils durch einen Laserpuls LP beaufschlagten Messfelder M ist abhängig von den Abstrahl- und Empfangsdivergenzen der Sende- und Empfängerkanäle 1.1, 2.1 und der Entfernung der Szenerie in dem so begrenzten Winkelbereich. Alle Messfelder M zusammen bilden das Sichtfeld FOV.

Die Anzahl der Sendekanäle 1.1 bestimmt die Anzahl der in Crossscanrichtung Rc übereinander liegenden Messfelder M. Gemäß dem in Fig. 1 dargestellten Ausführungsbeispiel sind zwei Sendeeinheiten 1 mit jeweils einem Sendekanal 1.1 vorhanden, deren Abstrahldivergenzen auf die Empfangsdivergenzen des Empfängerkanals 2.1 der einen Empfängereinheit 2 abgestimmt sind. Die Sendeeinheiten 1 werden fortlaufend im Wechsel angesteuert, sodass während eines Scans (einmaliges Abtasten des Sichtfeldes FOV) das Sichtfeld FOV quasi zeitgleich in zwei Zeilen abgetastet wird. Da die beiden Sendeeinheiten 1 nacheinander angesteuert werden, können sie beide dem nur einen Empfängerkanal 2.1 zugeordnet werden, wobei die Empfangsdivergenz des einen Empfängerkanals 2.1 in Crossscanrichtung Rc gleich oder größer einer resultierenden Abstrahldivergenz der zwei Sendekanäle 1.1 in Crossscanrichtung Rc ist.

Auch können zwei oder mehr Empfängereinheiten 2 vorhanden sein, die in Crossscanrichtung Rc nebeneinander angeordnet sind und denen jeweils ein oder mehrere Sendekanäle 1.1 zugeordnet sind, wobei im Falle von mehreren Sendekanälen 1.1 diese zu unterschiedlichen Sendeeinheiten 1 gehören.

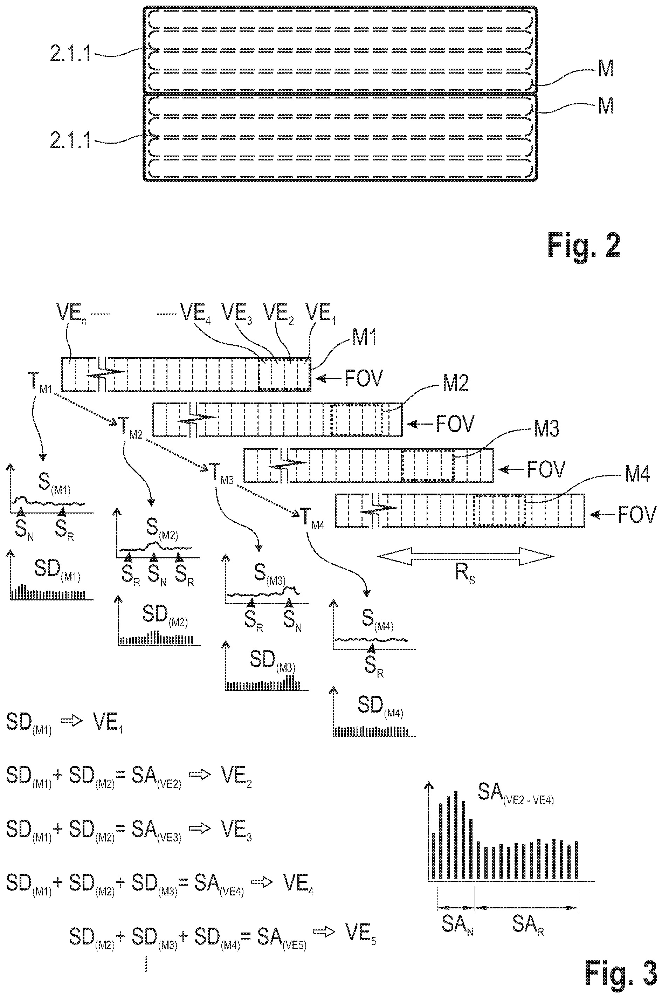

Fig. 2 zeigt beispielhaft eine Anordnung von zwei Empfängereinheiten 2, dargestellt durch die Empfängerflächen 2.1.1, und vier Sendeeinheiten 1 mit jeweils zwei Sendekanälen 1.1, dargestellt durch acht auf die Empfängerflächen 2.1.1 projizierte Messflächen M. Dabei ist von jeder der vier Sendeeinheiten 1 jeweils ein Sendekanal 1.1 einer der Empfängerflächen 2.1.1 zugeordnet, sodass die jeweils auf eine Empfängerfläche projizierten Messflächen M durch die vier Sendeinheiten 1 beleuchtet werden. Mit dieser Anordnung kann während eines Scans quasi zeitgleich ein Sichtfeld FOV aufgelöst in acht Zeilen gescannt werden. Dabei werden die Sendeeinheiten 1 nacheinander fortlaufend angesteuert. Der jeweils ausgesendete Laserpuls LP wird nach Strahlteilung über zwei Sendekanäle 1.1 in das Sichtfeld FOV gerichtet, wo unterschiedliche Messfelder M beaufschlagt werden und die reflektierten Anteile LP' des Laserpulses LP jeweils von einem der beiden Empfängereinheiten 2 empfangen werden.

Die Ortsauflösung des Sichtfeldes FOV in Crossscanrichtung R_{C} ist durch die Abstrahl- und Empfangsdivergenz in Crossscanrichtung R_{C} bestimmt. In Scanrichtung Rs ist die Ortsauflösung durch die erfindungsgemäße Signalverarbeitung der Empfängersignale S bestimmt, weitgehend unabhängig von der Scangeschwindigkeit und Pulsfrequenz, mit der die Laserpulse LP ausgesendet werden und das Sichtfeld FOV abtasten.

Die Signalverarbeitung ist ein Verfahrensschritt des nachfolgend beschriebenen erfindungsgemäßen Verfahrens.

Mit einem erfindungsgemäßen Verfahren erfolgt eine dreidimensionale Vermessung einer Szenerie in einem Sichtfeld FOV in großer Entfernung. Wie bei gattungsgleichen Verfahren aus dem Stand der Technik:
1. werden zeitlich nacheinander über wenigstens einen Sendekanal 1.1, der in einer Scanrichtung Rs und einer Crossscanrichtung Rc jeweils eine Abstrahldivergenz aufweist, Laserpulse LP in einer fortlaufenden Folge ausgesendet,
2. werden nach Reflexion der Laserpulse LP in einem Messfeld M in der Szenerie jeweils reflektierte Anteile LP' der Laserpulse LP nacheinander über wenigstens einen Empfängerkanal 2.1, der in der Scanrichtung Rs und der Crossscanrichtung Rc jeweils eine Empfangsdivergenz aufweist, empfangen und
3. wird ein Empfängersignal S über die Laufdauer eines jeden der Anteile LP' der Laserpulse LP gebildet, verstärkt und digitalisiert, während die Laserpulse LP in der Scanrichtung R_{S} gescannt werden, wobei mit jedem Laserpuls LP im Sichtfeld FOV, abhängig von einer Scangeschwindigkeit und einer Pulsfrequenz, ein anderes Messfeld M erfasst wird.

Es ist für das Verfahren erfindungswesentlich, dass das Sichtfeld FOV in eine Zeile oder eine Matrix bildende virtuelle Empfängerzellen VE unterteilt wird, die jeweils durch einen virtuellen Divergenzwinkel um eine gedachte Mittenachse charakterisiert sind, der um ein Vielfaches kleiner ist als die Abstrahl- und die Empfangsdivergenz in Scanrichtung Rs, sodass zeitgleich mehrere virtuelle Empfängerzellen VE innerhalb eines der Messfelder M liegen. Die Raumlagen der Mittenachsen der virtuellen Empfängerzellen VE sind jeweils durch einen Winkel α_{S} in Scanrichtung R_{S} und einen Winkel α_{C} in Crossscanrichtung Rc charakterisiert, wie beispielhaft in Fig. 1 an einer virtuellen Empfängerzelle VE(α_{C} α_{S}) gezeigt.

Die digitalisierten Empfängersignale SD werden jeweils jeder der innerhalb eines der Messfelder M liegenden virtuellen Empfängerzellen VE zugeordnet und die Scangeschwindigkeit und die Pulsfrequenz sind so aufeinander abgestimmt, dass sich die Messfelder M in Scanrichtung Rs überlappen, sodass jeder virtuellen Empfängerzelle VE mehrere aufeinanderfolgende digitalisierte Empfängersignale SD zugeordnet werden, aus denen für jede der virtuellen Empfängerzellen VE ein akkumuliertes Empfängersignal SA mit einem akkumulierten Nutzsignalanteil SA_{N} gebildet wird, aus dem eine Entfernung abgeleitet wird.

Virtuelle Empfängerzellen VE, die nur teilweise im Messfeld M liegen, werden entweder als im Messfeld M liegend oder außerhalb des Messfeldes M liegend betrachtet.

Praktisch kann hierzu die Speicher- und Auswerteeinheit 5 einer zur Durchführung des Verfahrens verwendeten Laserscaneinrichtung mehrere Speicher- und Auswertebereiche 5.1 enthalten. Das sind wenigstens so viele, wie virtuelle Empfängerzellen VE jeweils in einem Messfeld M liegen.

Jeder Speicher- und Auswertebereich 5.1 wird dann einer der virtuellen Empfängerzellen VE zugeordnet. Die digitalisierten Empfängersignale SD werden jeweils parallel in denjenigen Speicher- und Auswertebereichen 5.1 gespeichert, die virtuellen Empfängerzellen VE zugeordnet sind, die innerhalb des zum digitalisierten Empfängersignal SD gehörenden Messfeldes M liegen. Aus den jeweils durch eine Speicher- und Auswerteeinheit 5 gespeicherten digitalisierten Empfängersignalen VE werden akkumulierte Empfängersignale SA gebildet, aus denen jeweils eine Entfernung, die einer der virtuellen Empfängerzellen VE zugeordnet ist, abgeleitet wird.

In Fig. 3 ist das Sichtfeld FOV, das hier in eine Zeile von virtuellen Empfängerzellen VE unterteilt ist, zu vier aufeinanderfolgenden Zeitpunkten T_{M1} - T_{M4} dargestellt, zu denen sich jeweils die Lage des Messfeldes M, im Interesse einer übersichtlichen Darstellung, deutlich verändert hat. Praktisch ist die Scangeschwindigkeit nur so groß, dass pro virtueller Empfängerzelle VE bevorzugt mehr als 20 digitalisierte Empfängersignale SD akkumuliert werden. Durch das Scannen der Laserpulse LP in Scanrichtung Rs wird zu jedem dieser Zeitpunkte ein anderes Messfeld M1-M4 im Sichtfeld FOV ausgeleuchtet. Die jeweils aus dem reflektierten Anteil LP' eines jeden Laserpulses LP gewonnenen Empfängersignale S_{(M1)} - S_{(M4)} werden in digitalisierte Empfängersignale SD_{(M1)} bis SD_{(M4)} gewandelt und mit weiteren digitalisierten Empfängersignalen SD_{(M1)} - SD_{(M4)} akkumuliert, um jeweils ein einer der virtuellen Empfängerzellen VE₂ - VE₄ zugeordnetes akkumuliertes Empfängersignal SA_{(VE2)} - SA_{(VE4)} zu bilden. Die in Fig. 3 dargestellten Signalverläufe haben nur einen symbolischen Charakter. Ebenso haben die Anzahl der je Messfeld M überdeckten virtuellen Empfängerzellen VE und der Versatz nacheinander in Scanrichtung R_{S} erzeugter Messfelder M nur Beispielcharakter. Je mehr digitalisierte Empfängersignale SD akkumuliert werden können, desto besser wird das Signal-Rausch-Verhältnis zwischen dem akkumulierten Rauschsignalanteil SA_{R} und dem akkumulierten Nutzsignalanteil SA_{N}. Je schmaler die virtuellen Empfängerzellen VE gewählt werden, das heißt je kleiner der Winkelbereich des Sichtfeldes FOV ist der ihnen in Scanrichtung R_{S} zugeordnet, um so mehr wird das Ortsauflösungsvermögen in Scanrichtung Rs verbessert.

### Bezugszeichenliste

- 1: Sendeeinheit
- 1.1: Sendekanal
- 2: Empfängereinheit
- 2.1: Empfängerkanal
- 2.1.1: Empfängerfläche
- 3: Analog-Digital-Wandler
- 4: Ablenkeinheit
- 5: Speicher- und Auswerteeinheit
- 5.1: Speicher- und Auswertebereiche
- 6: Steuereinheit
- LP: Laserpuls
- LP': (zurück)reflektierter und detektierter Anteil des Laserpulses LP
- S: Empfängersignal
- SD: digitalisiertes Empfängersignal
- SA: akkumuliertes Empfängersignal
- S_{N}: Nutzsignalanteil des Empfängersignals S
- SA_{N}: akkumulierter Nutzsignalanteil
- S_{R}: Rauschsignalanteil des Empfängersignals S
- SA_{R}: akkumulierter Rauschsignalanteil
- FOV: Sichtfeld
- M: Messfeld
- VE: virtuelle Empfängerzelle
- R_{S}: Scanrichtung
- Rc: Crossscanrichtung
- T: Zeitpunkte des Aussendens von Laserpulsen LP

## Patentansprüche

1. Laserscaneinrichtung zur dreidimensionalen Vermessung einer Szenerie in einem Sichtfeld (FOV) in großer Entfernung mit
mindestens einer Sendeeinheit (1), mit mindestens einem Sendekanal (1.1), zum Aussenden einer Folge von Laserpulsen (LP),
mindestens einer Empfängereinheit (2), mit wenigstens einem Empfängerkanal (2.1), eine Empfängerfläche (2.1.1) aufweisend, zum Empfang von aus Messfeldern (M) der Szenerie zurückreflektierten Anteilen (LP') der Laserpulse (LP) in einer Folge und zur Bildung von Empfängersignalen (S),
einem Analog-Digital-Wandler (3) zur Digitalisierung der Empfängersignale (S) und einer Ablenkeinheit (4) zum Scannen der Sendeeinheit (1) und der in fester Relativlage hierzu angeordneten Empfängereinheit (2) in einer Scanrichtung (Rs), einer Speicher- und Auswerteeinheit (5) sowie einer Steuereinheit (6), wobei
die Laserpulse (LP) einen rechteckigen Strahlquerschnitt aufweisen, die Empfängerfläche (2.1.1) rechteckig ist, eine Abstrahldivergenz des wenigstens einen Sendekanals (1.1) sowie eine Empfangsdivergenz des wenigstens einen Empfängerkanals (2.1) in der Scanrichtung (R_{S})jeweils um ein Vielfaches größer sind als eine Abstrahldivergenz des wenigstens einen Sendekanals (1.1) und eine Empfangsdivergenz des wenigstens einen Empfängerkanals (2.1) in einer Crossscanrichtung (Rc), und die Speicher- und Auswerteeinheit (5) mehrere Speicher- und Auswertebereiche (5.1) zur parallelen Speicherung digitalisierter Empfängersignale (SD) und Bildung akkumulierter Empfängersignale (SA) enthält, aus denen jeweils eine Entfernung ableitbar ist.

2. Laserscaneinrichtung nach Anspruch 1, wobei die Abstrahl- und Empfangsdivergenzen in der Scanrichtung (Rs) wenigstens das Dreifache der Abstrahl- und Empfangsdivergenzen in der Crossscanrichtung (Rc) betragen.

3. Laserscaneinrichtung nach Anspruch 2, wobei die Abstrahldivergenz und die Empfangsdivergenz in der Scanrichtung (Rs) gleich sind.

4. Laserscaneinrichtung nach Anspruch 1 oder 3, wobei der wenigstens einen Empfängereinheit (2) mehrere Sendekanäle (1.1) zugeordnet sind, wobei die Empfangsdivergenz des wenigstens einen Empfängerkanals (2.1) in Crossscanrichtung (Rc) gleich oder größer einer resultierenden Abstrahldivergenz der mehreren Sendekanäle (1.1) in Crossscanrichtung (R_{C}) ist.

5. Laserscaneinrichtung nach Anspruch 4, wobei wenigstens zwei Empfängereinheiten (2) vorhanden sind, die in Crossscanrichtung (Rc) nebeneinander angeordnet sind.

6. Verfahren zur dreidimensionalen Vermessung einer Szenerie in einem Sichtfeld (FOV) in großer Entfernung, bei dem
zeitlich nacheinander über wenigstens einen Sendekanal (1.1) wenigstens einer Sendeeinheit (1), der in einer Scanrichtung (Rs) und einer Crossscanrichtung (Rc) jeweils eine Abstrahldivergenz aufweist, Laserpulse (LP), die einen rechteckigen Strahlquerschnitt aufweisen, in einer fortlaufenden Folge ausgesendet werden,
nach Reflexion in der Szenerie reflektierte Anteile (LP') der Laserpulse (LP) über wenigstens eine Empfängereinheit (2) mit wenigstens einem Empfängerkanal (2.1), eine rechteckige Empfängerfläche (2.1.1) aufweisend, der in der Scanrichtung (Rs) und der Crossscanrichtung (Rc) jeweils eine Empfangsdivergenz aufweist, empfangen werden und in einer Speicher- und Auswerteeinheit (5) mit mehreren Speicher- und Auswertebereichen (5.1) gespeichert und ausgewertet werden,
jeweils ein Empfängersignal (S) über die Laufdauer eines jeden der Anteile (LP') der Laserpulse (LP) gebildet und verstärkt wird und daraus ein digitalisiertes Empfängersignal (SD) gebildet wird, während die Laserpulse (LP) in der Scanrichtung (R_{S}) gescannt werden und mit jedem Laserpuls (LP) im Sichtfeld (FOV), abhängig von einer Scangeschwindigkeit und einer Pulsfrequenz, ein anderes Messfeld (M) erfasst wird,
die Abstrahldivergenz des wenigstens einen Sendekanals (1.1) sowie die Empfangsdivergenz des wenigstens einen Empfängerkanals (2.1) in der Scanrichtung (RS) jeweils um ein Vielfaches größer sind als die Abstrahldivergenz des wenigstens einen Sendekanals (1.1) und die Empfangsdivergenz des wenigstens einen Empfängerkanals (2.1) in einer Crossscanrichtung (RC),
das Sichtfeld (FOV) in eine Zeile oder eine Matrix bildende virtuelle Empfängerzellen (VE) unterteilt wird, die jeweils durch einen virtuellen Divergenzwinkel um eine gedachte Mittenachse charakterisiert sind, der um ein Mehrfaches kleiner ist als die Abstrahl- und die Empfangsdivergenz in Scanrichtung (R_{S}), sodass zeitgleich mehrere virtuelle Empfängerzellen (VE) innerhalb eines der Messfelder (M) liegen,
dass die digitalisierten Empfängersignale (SD) jeweils jeder der innerhalb eines der Messfelder (M) liegenden virtuellen Empfängerzellen (VE) zugeordnet werden und die Scangeschwindigkeit und Pulsfrequenz so aufeinander abgestimmt sind, dass sich die Messfelder (M) in Scanrichtung (Rs) überlappen, sodass jeder virtuellen Empfängerzelle (VE) mehrere aufeinanderfolgende digitalisierte Empfängersignale (SD) zugeordnet werden, aus denen für jede der virtuellen Empfängerzellen (VE) ein akkumuliertes Empfängersignal (SA) mit einem akkumulierten Nutzsignalanteil (SA_{N}) gebildet wird, aus dem eine Entfernung abgeleitet wird.

## Claims

1. A laser scanning device for the three-dimensional measurement of a setting in a field of view (FOV) from a great distance, comprising
at least one transmitter unit (1), having at least one transmission channel (1.1), for transmitting laser pulses (LP) in a sequence,
at least one receiver unit (2), having at least one receiver channel (2.1), which has a receiver surface (2.1.1), for receiving portions (LP') of the laser pulses (LP) reflected back from measurement fields (M) of the setting in a sequence and for forming receiver signals (S),
an analog-to-digital converter (3) for digitizing the receiver signals (S), and a deflection unit (4) for scanning the transmitter unit (1) and the receiver unit (2), in a scanning direction (R_{S}), the receiver unit (2) being arranged in a fixed relative position to the transmitter unit (1),
a memory and evaluation unit (5), as well as a control unit (6),
wherein the laser pulses (LP) have a rectangular beam cross-section, the receiver surface (2.1.1) is rectangular, an emission divergence of the at least one transmission channel (1.1) and a reception divergence of the at least one receiver channel (2.1) in the scanning direction (Rs) are in each case multiple times greater than an emission divergence of the at least one transmission channel (1.1) and a reception divergence of the at least one receiver channel (2.1) in a cross-scan direction (R_{C}), and the memory and evaluation unit (5) includes a plurality of memory and evaluation areas (5.1) for parallel storage of digitized receiver signals (SD) and formation of accumulated receiver signals (SA) from which a distance can be derived in each case.

2. The laser scanning device according to claim 1, wherein the emission and reception divergences in the scanning direction (Rs) are at least three times the emission and reception divergences in the cross-scan direction (R_{C}).

3. The laser scanning device according to claim 2, wherein the emission divergence and the reception divergence in the scanning direction (Rs) are equal.

4. The laser scanning device according to claim 1 or 3, wherein a plurality of transmission channels (1.1) is assigned to the at least one receiver unit (2), with the reception divergence of the at least one receiver channel (2.1) in the cross-scan direction (Rc) being equal to or greater than a resulting emission divergence of the plurality of transmission channels (1.1) in the cross-scan direction (Rc).

5. The laser scanning device according to claim 4, wherein at least two receiver units (2) are present, which are arranged next to each other in the cross-scan direction (R_{C}).

6. A method for the three-dimensional measurement of a setting in a field of view (FOV) from a great distance, wherein
laser pulses (LP), which have a rectangular beam beam cross-section, are emitted in a continuous sequence one after the other via at least one transmission channel (1.1) of at least one transmitter unit (1), which transmission channel (1.1) has an emission divergence in a scanning direction (R_{S}) and a cross-scan direction (Rc) in each case,
after reflection in the setting, reflected portions (LP') of the laser pulses (LP) are received via at least one receiver unit (2) with at least one receiver channel (2.1), which has a rectangular receiver surface (2.1.1.) and has a respective reception divergence in the scanning direction (Rs) and the cross-scan direction (R_{C}), and are stored and evaluated in a storage and evaluation unit (5) comprising a plurality of storage and evaluation areas (5.1),
a respective receiver signal (S) is formed and amplified over the travel time of each of the portions (LP') of the laser pulses (LP) and a digitized receiver signal (SD) is formed therefrom, while the laser pulses (LP) are scanned in the scanning direction (Rs) and a different measurement field (M) is detected with each laser pulse (LP) in the field of view (FOV), depending on a scanning speed and a pulse frequency,
the emission divergence of the at least one transmission channel (1.1) and the reception divergence of the at least one receiver channel (2.1) in the scanning direction (R_{S}) are in each case multiple times greater than the emission divergence of the at least one transmission channel (1.1) and the reception divergence of the at least one receiver channel (2.1) in a cross-scan direction (R_{C}),
the field of view (FOV) is divided into virtual receiver cells (VE) forming a row or a matrix, each of said virtual receiver cells (VE) being **characterized by** a virtual divergence angle about an imaginary center axis, which angle is multiple times smaller than the emission and reception divergence in the scanning direction (R_{S}), so that a plurality of virtual receiver cells (VE) is located simultaneously within one of the measurement fields (M), and
the digitized receiver signals (SD) are respectively assigned to each of the virtual receiver cells (VE) located within one of the measurement fields (M), and the scanning speed and the pulse frequency are matched to each other such that the measurement fields (M) overlap in the scanning direction (Rs) so that each virtual receiver cell (VE) is assigned a plurality of successive digitized receiver signals (SD), from which an accumulated receiver signal (SA) with an accumulated useful signal component (SA_{N}), from which a distance is derived, is formed for each of the virtual receiver cells (VE).

## Revendications

1. Dispositif de balayage laser pour la mesure tridimensionnelle d'une scène dans un champ de vision (FOV) à une distance élevée, comprenant au moins une unité d'émission (1), avec au moins un canal d'émission (1.1), pour émettre une séquence d'impulsions laser (LP),
au moins une unité de réception (2), avec au moins un canal de réception (2.1), présentant une surface de réception (2.1.1), pour la réception de parties (LP') des impulsions laser (LP), réfléchies à partir de champs de mesure (M) de la scène, dans une séquence et pour la formation de signaux de réception (S),
un convertisseur analogique-numérique (3) pour numériser les signaux de réception (S) et une unité de déviation (4) pour balayer l'unité d'émission (1) et l'unité de réception (2), disposée dans une position relative fixe par rapport à celle-ci, dans une direction de balayage (Rs),
une unité de mémorisation et d'évaluation (5) ainsi qu'une unité de commande (6),
les impulsions laser (LP) présentant une section transversale de faisceau rectangulaire, la surface de réception (2.1.1) étant rectangulaire, une divergence d'émission de l'au moins un canal d'émission (1.1) ainsi qu'une divergence de réception de l'au moins un canal de réception (2.1) dans la direction de balayage (R_{S}) étant respectivement plusieurs fois supérieures à une divergence d'émission de l'au moins un canal d'émission (1.1) et une divergence de réception de l'au moins un canal de réception (2.1) dans une direction de balayage croisé (Rc), et l'unité de mémorisation et d'évaluation (5) contenant plusieurs zones de mémorisation et d'évaluation (5.1) pour la mémorisation parallèle de signaux de réception numérisés (SD) et la formation de signaux de réception accumulés (SA), à partir desquels on peut déduire respectivement une distance.

2. Dispositif de balayage laser selon la revendication 1, dans lequel les divergences d'émission et de réception dans la direction de balayage (Rs) sont au moins le triple des divergences d'émission et de réception dans la direction de balayage croisé (Rc).

3. Dispositif de balayage laser selon la revendication 2, dans lequel la divergence d'émission et la divergence de réception sont égales dans la direction de balayage (R_{S}).

4. Dispositif de balayage laser selon la revendication 1 ou 3, dans lequel plusieurs canaux d'émission (1.1) sont associés à l'au moins une unité de réception (2), la divergence de réception de l'au moins un canal de réception (2.1) dans la direction de balayage croisé (Rc) étant égale ou supérieure à une divergence d'émission résultante des plusieurs canaux d'émission (1.1) dans la direction de balayage croisé (Rc).

5. Dispositif de balayage laser selon la revendication 4, dans lequel il y a au moins deux unités de réception (2) qui sont disposées l'une à côté de l'autre dans la direction de balayage croisé (Rc).

6. Procédé de mesure tridimensionnelle d'une scène dans un champ de vision (FOV) à une distance élevée, dans lequel
des impulsions laser (LP), qui présentent une section transversale de faisceau rectangulaire, sont émises successivement dans le temps en une séquence continue par l'intermédiaire d'au moins un canal d'émission (1.1) d'au moins une unité d'émission (1), l'au moins un canal d'émission (1.1) présentant une divergence d'émission respectivement dans une direction de balayage (Rs) et dans une direction de balayage croisé (Rc),
des parties (LP') des impulsions laser (LP) réfléchies après réflexion dans la scène sont reçues par l'intermédiaire d'au moins une unité de réception (2) avec au moins un canal de réception (2.1), présentant une surface de réception rectangulaire (2.1.1), qui présente une divergence de réception respectivement dans la direction de balayage (R_{S}) et dans la direction de balayage transversal (Rc), et sont mémorisées et évaluées dans une unité de mémorisation et d'évaluation (5) avec plusieurs zones de mémorisation et d'évaluation (5.1),
on forme et on amplifie respectivement un signal de récepteur (S) sur la durée de propagation de chacune des parties (LP') des impulsions laser (LP) et on en forme un signal de récepteur numérisé (SD), tandis que les impulsions laser (LP) sont balayées dans la direction de balayage (R_{S}) et qu'avec chaque impulsion laser (LP), on détecte dans le champ de vision (FOV), en fonction d'une vitesse de balayage et d'une fréquence d'impulsion, un autre champ de mesure (M),
la divergence d'émission de l'au moins un canal d'émission (1.1) ainsi que la divergence de réception de l'au moins un canal de réception (2.1) dans la direction de balayage (R_{S}) sont respectivement plusieurs fois supérieures à la divergence d'émission de l'au moins un canal d'émission (1.1) et la divergence de réception de l'au moins un canal de réception (2.1) dans une direction de balayage croisé (Rc),
le champ de vision (FOV) est divisé en cellules réceptrices virtuelles (VE) formant une ligne ou une matrice et étant chacune **caractérisées par** un angle de divergence virtuel autour d'un axe central imaginaire, qui est plusieurs fois inférieur à la divergence d'émission et de réception dans la direction de balayage (R_{S}), de sorte que plusieurs cellules réceptrices virtuelles (VE) se trouvent simultanément à l'intérieur d'un des champs de mesure (M), et
les signaux de récepteur numérisés (SD) sont respectivement associés à chacune des cellules de récepteur virtuelles (VE) situées à l'intérieur de l'un des champs de mesure (M) et la vitesse de balayage et la fréquence d'impulsion sont accordées entre elles de telle sorte que les champs de mesure (M) se chevauchent dans la direction de balayage (Rs), de sorte qu'à chaque cellule réceptrice virtuelle (VE) sont associés plusieurs signaux de réception numérisés successifs (SD), à partir desquels est formé, pour chacune des cellules réceptrices virtuelles (VE), un signal de réception accumulé (SA) avec une composante de signal utile accumulée (SAN), à partir duquel est déduite une distance.
